# EUROPÄISCHE PATENTANMELDUNG

(11) **EP 2 500 620 A1**
(43) Veröffentlichungstag der Anmeldung: **19.09.2012**
(21) Anmeldenummer: 12159367.7
(22) Anmeldetag: 14.03.2012
(51) Int. Cl.: F17C 13/04, F16K 1/30

(54) **Verschlussvorrichtung für ein Probenahmegefäß**

(30) Priorität: 16.03.2011 DE 202011004400 U
(71) Anmelder: Gebr. Rieger GmbH & Co. KG, 73431 Aalen (DE); Krones AG, 93073 Neutraubling (DE)
(72) Erfinder: Neu, Doris, 73434 Aalen (DE); Zierer, Martin, 93179 Brennberg (DE); Hartmann, Stephan, 92272 Freudenberg (DE)
(74) Vertreter: Patentanwälte Ruff, Wilhelm, Beier, Dauster & Partner

(57) **Zusammenfassung**

Die Erfindung betrifft eine Verschlussvorrichtung für einen Behälter, insbesondere für ein Probenahmegefäß, umfassend ein Gehäuse (20) mit einem Verbindungsteil (21) für den Behälter und mit einer Haupt-Ventilkammer (22), die eine Produktanschlussöffnung und eine Eintragsöffnung (24) zu dem Verbindungsteil (21) aufweist, und ein in der Haupt-Ventilkammer (22) angeordnetes Haupt-Verschlusselement (25), welches mit einem an der Eintragsöffnung (24) gebildeten Ventilsitz zusammenwirkt, um die Eintragsöffnung (24) zu schließen, wobei das Verbindungsteil einen Überdruckraum mit einem als Überdruckventil gestalteten Sicherheitsventil (4) aufweist. Die Erfindung betrifft weiter ein Probenahmegefäß mit einer Verschlussvorrichtung. Schließlich betrifft die Erfindung ein Verfahren zum Befüllen eines Behälters, insbesondere eines Probenahmegefäßes.

## Beschreibung

Die Erfindung betrifft eine Verschlussvorrichtung für einen Behälter, insbesondere für ein Probenahmegefäß. Die Erfindung betrifft weiter ein Probenahmegefäß mit einer Verschlussvorrichtung. Schließlich betrifft die Erfindung ein Verfahren zum Befüllen eines Behälters, insbesondere eines Probenahmegefäßes.

Probenahmesysteme werden in der pharmazeutischen oder biopharmazeutischen Industrie, der Kosmetik-, Nahrungsmittel- und/oder Getränkeindustrie eingesetzt, um Proben einem produktführenden Rohrsystem oder einem Behälter zu entnehmen. Anhand entnommener Proben wird eine Qualitätskontrolle der Produkte durch entsprechende Analysen durchgeführt. Die Probengewinnung erfolgt üblicherweise aus einer Durchflussleitung in ein Probenahmegefäß, auch als Probenahmeflasche oder Probenflasche bezeichnet. Um eine aussagekräftige Qualitätskontrolle durchführen zu können, ist eine hohe Sterilität, eine hohe Genauigkeit und eine Reproduzierbarkeit bei der Probengewinnung und einer anschließenden Handhabung der Probe notwendig.

Es ist eine Aufgabe der Erfindung, eine Verschlussvorrichtung für ein Probenahmegefäß zu schaffen, welche einen Transfer einer Probe aus einem Prozess in das Probenahmegefäß und eine Lagerung der Probe in dem Probenahmegefäß verbessert. Es ist eine weitere Aufgabe der Erfindung, ein Probenahmegefäß mit einer Verschlussvorrichtung zu schaffen. Schließlich ist es eine Aufgabe der Erfindung, ein Verfahren zum Befüllen eines Behälters, insbesondere eines Probenahmegefäßes, zu schaffen.

Diese Aufgabe wird gelöst durch eine Verschlussvorrichtung für einen Behälter, insbesondere für ein Probenahmegefäß, umfassend ein Gehäuse mit einem Verbindungsteil für den Behälter und mit einer Haupt-Ventilkammer, die eine Produktanschlussöffnung und eine Eintragsöffnung zu dem Verbindungsteil aufweist, und einen in der Ventilkammer angeordneten Haupt-Verschlusselement, welches mit einem an der Eintragsöffnung gebildeten Ventilsitz zusammenwirkt, um die Eintragsöffnung zu schließen, wobei das Verbindungsteil einen Überdruckraum mit einem als Überdruckventil gestalteten Sicherheitsventil aufweist.

Das Haupt-Verschlusselement und ein zugehöriger Ventilsitz bilden ein Haupt-Füll-Ventil für ein Probenahmegefäß. Das Gehäuse wird entsprechend auch als Ventilkopfgehäuse bezeichnet.

Die Aufgabe wird weiter gelöst durch ein Probenahmegefäß mit einer Verschlussvorrichtung.

Das Probenahmegefäß ist vorzugsweise als druckfeste, standardisierte Glas- oder Kunststoffflasche mit einem Verbindungsanschluss zu der Verschlussvorrichtung ausgebildet. Als Verbindungsanschluss ist vorzugsweise ein Schraubgewinde vorgesehen, welches mit einem Innengewinde an der Verschlussvorrichtung zusammenwirkt. Die Verschlussvorrichtung und das Probenahmegefäß sind so lösbar miteinander verbunden und zum Reinigen voneinander trennbar. Für eine Sterilisation im Autoklav sind die Teile vorzugsweise bereits montiert.

Schließlich wird die Aufgabe gelöst durch ein Verfahren zum Befüllen eines Behälters, insbesondere eines Probenahmegefäßes, mittels einer Verschlussvorrichtung umfassend ein Gehäuse mit einem Verbindungsteil für den Behälter, wobei für einen Druckabbau innerhalb des Behälters beim Befüllen ein als Überdruckventil gestaltetes, einem Überdruckraum des Verbindungsteil zugeordnetes Sicherheitsventil geöffnet wird.

Der Behälter wird über eine Produktanschlussöffnung befüllt. Das Gehäuse umfasst eine Haupt-Ventilkammer mit der Produktanschlussöffnung und einer Eintragsöffnung zu dem Verbindungsteil und ein in der Haupt-Ventilkammer angeordnetes Haupt-Verschlusselement, welches mit einem an der Eintragsöffnung gebildeten Ventilsitz zusammenwirkt, um die Eintragsöffnung nach dem Befüllen zu schließen.

Eine Probenahme erfolgt vielfach unter Druck, bei Vakuum und/oder mit hohen Temperaturen. Insbesondere bei einem schnellen Befüllen und Verschließen eines Probenahmegefäßes kann es zu einem hohen Druckaufbau innerhalb des Probenahmegefäßes kommen. Durch das erfindungsgemäße Sicherheitsventil ist ein Druckabbau möglich und so eine Sicherheit verbessert. Das Sicherheitsventil wird entsprechend auch als Druckablassventil bezeichnet.

In einer vorteilhaften Ausgestaltung weist die Verschlussvorrichtung, insbesondere der Überdruckraum, eine durch einen Sterilluftfilter verschlossene Öffnung auf. Bei einem Befüllen eines Probenahmegefäßes entweicht üblicherweise über den Sterilluftfilter die in dem Gefäß vorhandene Luft. Sollte der Sterilluftfilter verstopft sein oder es aus einem anderen Grund zu einem erhöhten Druckaufbau in dem Gefäß kommen, so öffnet das Sicherheitsventil.

In einer vorteilhaften Ausgestaltung ist vorgesehen, dass die Haupt-Ventilkammer eine durch ein Reinigungsventil verschließbare Reinigungsöffnung aufweist. Vor einer Verwendung einer Verschlussvorrichtung wird diese üblicherweise an ein Probenahmegefäß, wie eine Laborflasche angebracht und alle Ventile werden geschlossen. In diesem Zustand erfolgt eine Sterilisation im Autoklaven. Beim Transport zu einer Probenahmestelle verbleiben alle Ventile geschlossen. An der Probenahmestelle ist nach einem Anschluss an entsprechende Leitungen möglich, das Reinigungsventil zu öffnen und den Innenraum zu sterilisieren. Anschließend wird das Reinigungsventil wieder geschlossen. Durch Öffnen der Eintragsöffnung mittels des Haupt-Verschlusselements ist es dann möglich, das Probenahmegefäß zu befüllen. Nach einem Verschließen der Eintragsöffnung mittels des Haupt-Verschlusselements ist es erneut möglich, die Haupt-Ventilkammer mit einer Reinigungs-und/oder einer Sterilisationsflüssigkeit und/oder mittels Dampf zu reinigen.

In einer Weiterbildung ist vorgesehen, dass das Reinigungsventil als Überdruckventil gestaltet ist. Insbesondere bei einer Reinigung mit Dampf ist so eine Reinigung ohne Umrüstung der Verschlussvorrichtung möglich.

In einer weiteren Ausgestaltung der Verschlussvorrichtung ist vorgesehen, dass das als Überdruckventil gestaltete Sicherheitsventil und/oder das als Überdruckventil gestaltete Reinigungsventil ein Rückstellelement, insbesondere eine Rückstellfeder, und ein durch das Rückstellelement in einer Schließstellung gehaltenes, in einer Ventilkammer angeordnetes Verschlusselement aufweist/aufweisen. Durch geeignete Wahl des Rückstellelements, insbesondere durch eine Auslegung einer Federkonstante einer Rückstellfeder ist so ein Öffnungsdruck festlegbar. Beispielsweise wird das Rückstellelement derart ausgelegt, dass ein Schwellwert für ein Öffnen des Sicherheitsventils bei ca. 0,8 bar bis ca. 1,6 bar liegt. Der Schwellwert für ein Öffnen des Reinigungsventils liegt dagegen beispielsweise bei ca. 6 bar.

In einer Weiterbildung der Erfindung ist das Verschlusselement als Kunststoffstopfen mit einem eine Ventilspindel ummantelnden Faltenbalg, insbesondere aus Polytetrafluorethylen, gestaltet. Das Verschlusselement ist einteilig gestaltet, wobei ein von dem Kunststoffstopfen abgewandtes Ende des Faltenbalgs in einem zugehörigen Ventilgehäuse stationär gelagert ist. Beim Verstellen des Verschlusselements mittels einer Ventilspindel wird somit ein Kontakt mit der Umgebung vermieden, so dass eine Sterilität in der Ventilkammer erhalten bleibt.

In einer weiteren Ausgestaltung ist vorgesehen, dass das Sicherheitsventil und/oder das Reinigungsventil einen von der zugehörigen Ventilkammer abgetrennten Rückstellraum aufweist/aufweisen, in welchem das zugehörige Rückstellelement angeordnet ist. In dem Rückstellraum ist keine Sterilität gefordert. Vorzugsweise ist der Rückstellraum des Sicherheitsventils und/oder des Reinigungsventils durch zwei in Längsrichtung des zugehörigen Rückstellelements relativ zueinander beweglich gekoppelte Gehäuseteile gebildet. Dadurch ist eine Größe des Rückstellraums und damit eine Vorspannung des Rückstellelements variierbar. Je nach Bedarf kann so ein Öffnungsdruck für das Sicherheitsventil und/oder das Reinigungsventil individuell konfiguriert werden.

In einer Weiterbildung sind das Rückstellelement, ein dem Rückstellraum zugeordnetes Gehäuse und die Ventilspindel des Sicherheitsventils und/oder des Reinigungsventils zu einer vormontierten Antriebsbaugruppe zusammengefasst. Das vorzugsweise als Kunststoffstopfen mit einem die Ventilspindel ummantelnden Faltenbalg gestaltete Verschlusselement ist an der Ventilspindel montierbar. Durch Demontage der Antriebsbaugruppe ist ein einfacher Wechsel des Ventilelements möglich.

In einer weiteren Ausgestaltung ist vorgesehen, dass die Ventilkammer des Sicherheitsventils und/oder des Reinigungsventils einen Anschlussstutzen aufweist/aufweisen. Über den Anschlussstutzen sind Auffangbehälter, Gefäße, Rohrelemente oder dergleichen anschließbar, um eine Reinigungsflüssigkeit und/oder ein aufgrund eines Überdrucks in dem Gefäß auslaufendes Produkt aufzufangen. Weiter ist ein Defekt des Ventilelements schnell erkennbar, wenn das Produkt trotz geschlossenem Ventilelement über den Anschlussstutzen austritt.

Die Verschlussvorrichtung umfasst in vorteilhaften Ausgestaltungen ein Füllrohr, welches in der Eintragsöffnung angeordnet ist. Das Füllrohr reicht in ein Inneres des Probenahmegefäßes um eine gute Befüllung zu gewährleisten.

In noch einer weiteren Ausgestaltung ist vorgesehen, dass die Verschlussvorrichtung eine pneumatisch angesteuerte und/oder eine handbetätigbare Betätigungsvorrichtung für das Haupt-Verschlusselement aufweist. Das Haupt-Verschlusselement ist dabei in einer Ausgestaltung wahlweise pneumatisch angesteuert oder handbetätigt in eine Öffnungs-oder eine Schließstellung überführbar. In vorteilhaften Ausgestaltungen sind Rückstellelemente vorgesehen, welche das Haupt-Verschlusselement in die Schließstellung zwingen.

Weitere Vorteile der Erfindung ergeben sich aus den Unteransprüchen und aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: eine Seitenansicht eines erfindungsgemäßen Probenahmegefäßes;
- Fig. 2:: eine geschnittene Seitenansicht des Probenahmegefäßes gemäß Fig. 1 in einer um ca. 90°gedrehten Ansicht;
- Fig. 3:: eine Detailansicht einer Verschlussvorrichtung des Probenahmegefäßes gemäß Fig. 2;
- Fig. 4:: eine Detailansicht einer Verschlussvorrichtung eines Probenahmegefäßes ähnlich Fig. 2 und
- Fig. 5:: eine Detailansicht der Verschlussvorrichtung gemäß Fig. 4 in einer um ca. 90°gedrehten Ansicht.

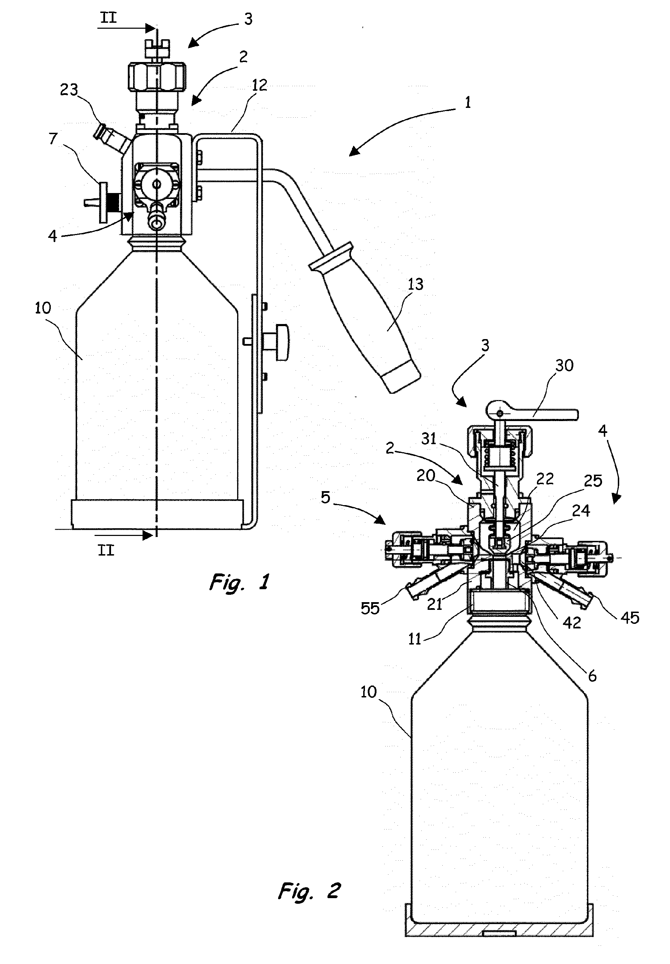

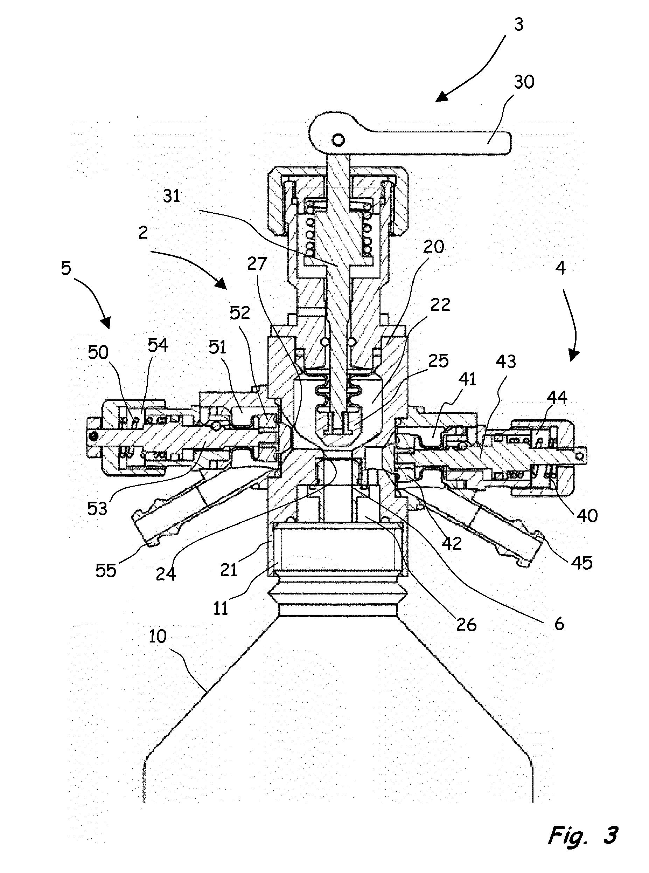

Fig. 1 zeigt schematisch ein erfindungsgemäßes Probenahmegefäß 1 mit einer Verschlussvorrichtung 2 in einer Seitenansicht. Fig. 2 zeigt das Probenahmegefäß 1 in einer Schnittansicht gemäß einer in Fig. 1 eingezeichneten Schnittebene II-II und Fig. 3 zeigt die Verschlussvorrichtung 2 in einer vergrößerten Darstellung.

Das Probenahmegefäß 1 ist als druckfeste, standardisierte Laborflasche 10, beispielsweise als Glas- oder Kunststoffflasche, mit einem Verbindungsanschluss 11 zu der Verschlussvorrichtung 2 ausgebildet. Als Verbindungsanschluss 11 ist vorzugsweise ein Schraubgewinde vorgesehen, welches mit einem Innengewinde an der Verschlussvorrichtung 2 zusammenwirkt. Im Anschlussbereich sind dabei mehrere, als O-Ringe gestaltete Dichtungselemente vorgesehen.

In der dargestellten Ausführungsform ist weiter ein Bügel 12 vorgesehen, an welchem die Laborflasche 10 und die Verschlussvorrichtung 2 gelagert sind. Der Bügel 12 weist für eine Handhabung einen Handgriff 13 auf.

Die Verschlussvorrichtung 2 umfasst ein Gehäuse 20 mit einem Verbindungsteil 21 für die Laborflasche 10 und mit einer Haupt-Ventilkammer 22. Die Haupt-Ventilkammer 22 weist eine mit einem Anschlussstutzen 23 gestaltete Produktanschlussöffnung und eine Eintragsöffnung 24 zu dem Verbindungsteil 21 auf. Die Verschlussvorrichtung 2 umfasst weiter ein in der Haupt-Ventilkammer 22 angeordnetes Haupt-Verschlusselement 25, welches mit einem an der Eintragsöffnung 24 gebildeten Ventilsitz zusammenwirkt, um die Eintragsöffnung 24 zu schließen. Das Haupt-Verschlusselement 25 und der Ventilsitz der Eintragsöffnung 24 bilden somit ein Haupt-Füll-Ventil.

Das Haupt-Verschlusselement 25 ist als Kunststoffstopfen mit einem Faltenbalg gestaltet, wobei freie Enden des Faltenbalgs in dem Gehäuse 20 gelagert sind. Zum Verstellen des Haupt-Verschlusselement 25 ist ein Antrieb 3 umfassend einen Kniehebel 30 und eine Ventilspindel 31 vorgesehen. Die Ventilspindel 31 ist durch den Faltenbalg ummantelt, so dass eine Kontaminierung der Haupt-Ventilkammer 22 bei Bewegung des Haupt-Verschlusselements 25 zum Öffnen oder Verschließen der Eintragsöffnung 24 vermieden ist. Die Ventilspindel 31 wirkt in anderen Ausgestaltungen mit einer nicht dargestellten pneumatischen Antriebseinrichtung zusammen.

Das Verbindungsteil 21 weist einen Überdruckraum 26 mit einem als Überdruckventil gestalteten Sicherheitsventil 4 auf.

Das Sicherheitsventil 4 öffnet bei einem auftretenden Überdruck bei einem Befüllen der Laborflasche 10 oder nach einem Befüllen der Laborflasche 10, sodass ein Überdruck in dem Probenahmegefäß 1 vermieden wird.

Das als Überdruckventil gestaltete Sicherheitsventil 4 umfasst ein als Rückstellfeder 40 ausgebildetes Rückstellelement und ein durch die Rückstellfeder 40 in einer Schließstellung gehaltenes, in einer Ventilkammer 41 angeordnetes Verschlusselement 42. Das Verschlusselement 42 ist als Kunststoffstopfen mit einem eine Ventilspindel 43 ummantelnden Faltenbalg gestaltet. Der Kunststoffstopfen mit dem Faltenbalg ist vorzugsweise aus Polytetrafluorethylen. Freie Enden des Faltenbalgs sind in einem Gehäuse des Sicherheitsventils 4 gelagert. Eine Eintragung vom Verunreinigungen über die Ventilspindel 43 wird so verhindert.

Das Sicherheitsventil 4 weist weiter einen von der Ventilkammer 41 abgetrennten Rückstellraum 44 auf, in welchem die Rückstellfeder 40 angeordnet ist. Ein Gehäuse des Sicherheitsventils 4 ist durch mehrere Gehäuseteile gebildet. In dem dargestellten Ausführungsbeispiel ist die Ventilspindel 43 in einem Gehäuseteil beweglich gelagert und weist einen Ringvorsprung auf, an welchem sich die Rückstellfeder 40 mit einem Ende abstützt. Mit dem zweiten Ende stützt sich die Rückstellfeder 40 gegen ein zweites Gehäuseteil ab. Der Rückstellraum 44 ist durch die zwei in Längsrichtung der Rückstellfeder 40 relativ zueinander beweglich gekoppelten Gehäuseteile gebildet. Dadurch ist die Größe des Rückstellraums 44 und somit eine Vorspannung der Rückstellfeder 40 einstellbar. In vorteilhaften Ausgestaltungen sind die Rückstellfeder 40 und der Rückstellraum 44 derart ausgelegt, dass ein Schwellwert für eine Öffnung des Sicherheitsventils 4 zwischen ca. 0,8 bar bis ca. 1,6 bar einstellbar ist.

Die Ventilkammer 41 des Sicherheitsventils 4 weist weiter einen Anschlussstutzen 45 auf, an welchem ein nicht dargestelltes Anschlussrohr oder dergleichen anschließbar ist, und über welchen ein über das Sicherheitsventil 4 abgelassenes Medium ausgetragen wird. Ein Austritt von Produkt über den Anschlussstutzen 45 weist auf einen Defekt des Verschlusselements 43 hin.

Die dargestellte Verschlussvorrichtung 1 weist weiter ein Reinigungsventil 5 auf, wobei das Sicherheitsventil 4 und das Reinigungsventil 5 im Wesentlichen baugleich gestaltet sind. Dadurch ist eine kostengünstige Fertigung möglich.

Das Reinigungsventil 5 ist ebenfalls als Überdruckventil gestaltet und verschließt eine an der Haupt-Ventilkammer 24 vorgesehene Reinigungsöffnung 27.

Das als Überdruckventil gestaltete Reinigungsventil 5 umfasst eine als Rückstellelement wirkende Rückstellfeder 50 und ein durch die Rückstellfeder 50 in einer Schließstellung gehaltenes, in einer Ventilkammer 51 angeordnetes Verschlusselement 52. Das Verschlusselement 52 ist als Kunststoffstopfen mit einem eine Ventilspindel 53 ummantelnden Faltenbalg gestaltet. Das Reinigungsventil 5 ist somit ein aseptisches Ventil. Die Ventilkammer 51 schließt an die Haupt-Ventilkammer 22 an, wobei das Gehäuse 20 mit einem Ventilsitz 27 für das Reinigungsventil 5 versehen ist. Das Reinigungsventil 5 weist weiter einen von der Ventilkammer 51 abgetrennten Rückstellraum 54 auf, in welchem die Rückstellfeder 50 angeordnet ist.

Auch der Rückstellraum 54 des Reinigungsventils 5 ist durch zwei in Längsrichtung der Rückstellfeder 50 relativ zueinander beweglich gekoppelte Gehäuseteile gebildet, um eine Öffnungskraft durch Veränderung der Länge des Rückstellraums 54 und damit einer Vorspannung der Rückstellfeder 50 zu variieren.

Zum Befüllen des Probenahmegefäßes 1 mit einem Produkt ist das Reinigungsventil 5 geschlossen. Zum Reinigen der Haupt-Ventilkammer 22 wird dagegen die Eintragsöffnung 24 geschlossen und das Reinigungsventil 5 geöffnet. Aufgrund der Form und der Anordnung des Haupt-Verschlusselements 25 wird verhindert, dass es zu einer Öffnung der Eintragsöffnung 24 und damit zu einem Eintritt des Reinigungsmittels in die Laborflasche 10 kommt.

Die Ventilkammer 51 des Reinigungsventils 5 weist einen Anschlussstutzen 55 auf, über welchen eine Reinigungslösung abfließen kann. Ein Defekt des Verschlusselements 52 ist durch einen Produktaustritt bei verschlossenem Ventil sicher erkennbar.

Die dargestellte Verschlussvorrichtung 2 umfasst weiter ein Füllrohr 6, welches in der Eintragsöffnung 24 zum Befüllen der Laborflasche 10 angeordnet ist.

Weiter weist die dargestellte Verschlussvorrichtung 2 einen Nippel mit einem Sterilluftfilter 7 für eine sterile Luftabfuhr an dem Überdruckraum 26 auf. Über den Sterilluftfilter entweicht bei einem Befüllen der Laborflasche 10 üblicherweise die in der Laborflasche 10 vorhandene Luft. Sollte der Sterilluftfilter 7 verstopft sein oder es aus einem anderen Grund zu einem erhöhten Druckaufbau in Laborflasche 10 kommen, so öffnet das Sicherheitsventil 4.

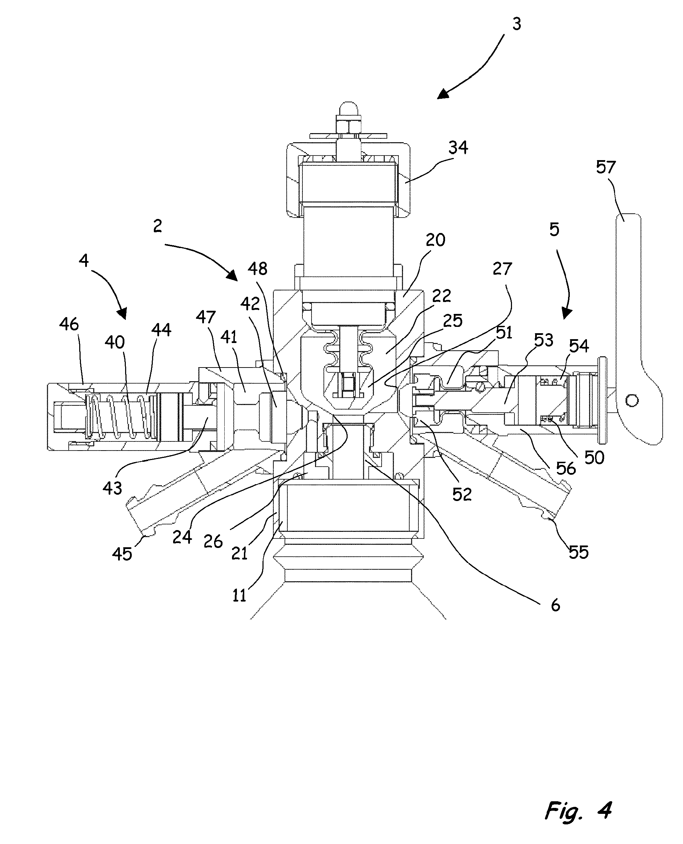

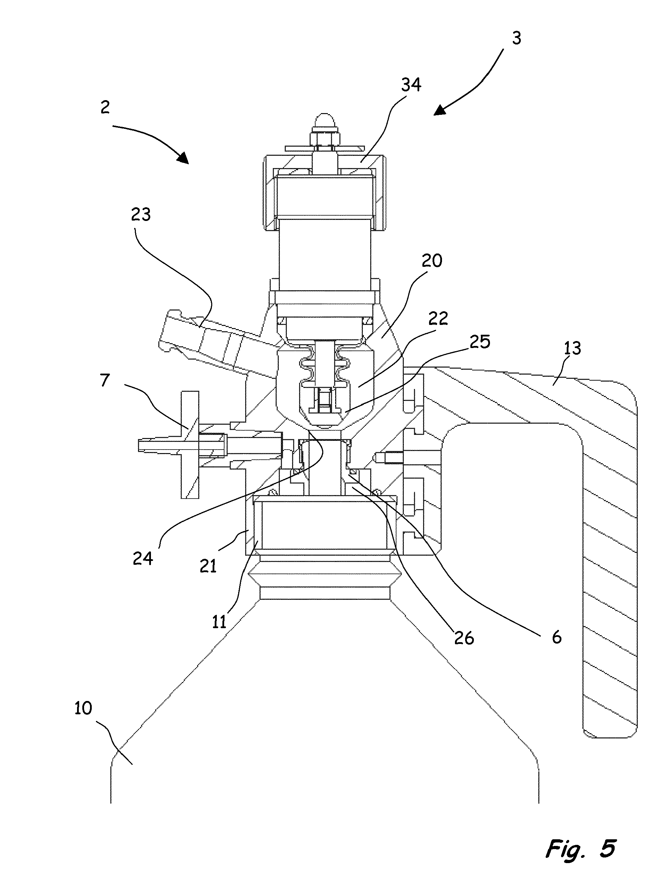

Fig. 4 und 5 zeigen eine ein Detail einer alternativen Ausgestaltung einer Verschlussvorrichtung 2 ähnlich Fig. 1 bis 3, wobei für gleiche Bauteile einheitliche Bezugszeichen verwendet werden.

Bei der Ausgestaltung gemäß Fig. 4 und 5 sind bei dem Sicherheitsventil 4 die Rückstellfeder 40, ein dem Rückstellraum 44 zugeordnetes Gehäuse 46 und die Ventilspindel 43 als Antriebsbaugruppe zusammengefasst. An dieser Antriebsbaugruppe ist das als Kunststoffstopfen mit einem nach der Montage die Ventilspindel 43 ummantelnden Faltenbalg gestaltete Verschlusselement 42 montierbar. An dem Gehäuse 20 ist ein Ventilkopfgehäuse 47 des Sicherheitsventils 4 montierbar, wobei zwischen den Bauteilen ein Dichtelement 48 angeordnet ist. Die Antriebsbaugruppe ist an dem Ventilkopfgehäuse 47 anbringbar.

Das Haupt-Verschlusselement 25 ist mittels einer nicht dargestellten Feder in einer Verschlussstellung gehalten. Zum Überführen des Haupt-Verschlusselement 25 in eine Offenstellung ist bei der Ausgestaltung gemäß den Fig. 4 und 5 ein Handrad 34 vorgesehen.

Das Reinigungsventil 5 ist mittels der Rückstellfeder 50 in einer Verschlussstellung gehalten. Bei der Ausgestaltung gemäß Fig. 4 und 5 sind auch bei dem Reinigungsventil 5 die Rückstellfeder 50, ein dem Rückstellraum 54 zugeordnetes Gehäuse 56 und die Ventilspindel 53 als Antriebsbaugruppe zusammengefasst. An dieser Antriebsbaugruppe ist das als Kunststoffstopfen mit einem nach der Montage die Ventilspindel 53 ummantelnden Faltenbalg gestaltete Verschlusselement 52 montierbar. Zum Öffnen des Reinigungsventils 5 ist bei der Ausgestaltung gemäß den Fig. 4 und 5 ein Kniehebel 57 vorgesehen. Das Reinigungsventil 5 ist als Überdruckventil gestaltet und öffnet bei einem hohen Druck, beispielsweise bei einem Druck über 6 bar selbsttätig.

Die Gestaltung mit den Antriebsbaugruppen ermöglicht eine einfache Montage und Demontage, beispielsweise zum Austauschen von Verschleißteilen.

Für den Transport eines mit der Verschlussvorrichtung 2 verbundenen Probenahmegefäßes 10 ist ein Haltegriff 13 vorgesehen.

## Patentansprüche

1. Verschlussvorrichtung für einen Behälter, insbesondere für ein Probenahmegefäß (1), umfassend ein Gehäuse (20) mit einem Verbindungsteil (21) für den Behälter und mit einer Haupt-Ventilkammer (22), die eine Produktanschlussöffnung und eine Eintragsöffnung (24) zu dem Verbindungsteil (21) aufweist, und ein in der Haupt-Ventilkammer (22) angeordnetes Haupt-Verschlusselement (25), welches mit einem an der Eintragsöffnung (24) gebildeten Ventilsitz zusammenwirkt, um die Eintragsöffnung (24) zu schließen,
**dadurch gekennzeichnet, dass** das Verbindungsteil einen Überdruckraum mit einem als Überdruckventil gestalteten Sicherheitsventil (4) aufweist.

2. Verschlussvorrichtung nach Anspruch 1, **dadurch gekennzeichnet, dass** die Verschlusseinrichtung (2) eine durch einen Sterilluftfilter (7) verschlossene Öffnung aufweist.

3. Verschlussvorrichtung nach Anspruch 1 oder 2, **dadurch gekennzeichnet, dass** die Haupt-Ventilkammer (22) eine durch ein Reinigungsventil (5) verschließbare Reinigungsöffnung (27) aufweist.

4. Verschlussvorrichtung nach Anspruch 3, **dadurch gekennzeichnet, dass** das Reinigungsventil (5) als Überdruckventil gestaltet ist.

5. Verschlussvorrichtung nach einem der Ansprüche 1 bis 4, **dadurch gekennzeichnet, dass** das als Überdruckventil gestaltete Sicherheitsventil (4) und/oder das als Überdruckventil gestaltete Reinigungsventil (5) ein Rückstellelement, insbesondere eine Rückstellfeder (40, 50), und ein durch das Rückstellelement in einer Schließstellung gehaltenes, in einer Ventilkammer (41, 51) angeordnetes Verschlusselement (42, 52) aufweist/aufweisen.

6. Verschlussvorrichtung nach Anspruch 5, **dadurch gekennzeichnet, dass** das Verschlusselement (42, 52) des Sicherheitsventils (4) und/oder des Reinigungsventils (5) als Kunststoffstopfen mit einem eine Ventilspindel (43, 53) ummantelnden Faltenbalg, insbesondere aus Polytetrafluorethylen, gestaltet ist.

7. Verschlussvorrichtung nach einem der Ansprüche 5 oder 6, **dadurch gekennzeichnet, dass** das Sicherheitsventil (4) und/oder das Reinigungsventil (5) einen von der zugehörigen Ventilkammer (41, 51) abgetrennten Rückstellraum (44, 54) aufweist/aufweisen, in welchem das zugehörige Rückstellelement (40, 50) angeordnet ist.

8. Verschlussvorrichtung nach Anspruch 7, **dadurch gekennzeichnet, dass** der Rückstellraum (44, 54) des Sicherheitsventils (4) und/oder des Reinigungsventils (5) durch zwei in Längsrichtung des zugehörigen Rückstellelements (40, 50) relativ zueinander beweglich gekoppelte Gehäuseteile gebildet ist.

9. Verschlussvorrichtung nach Anspruch 7 oder 8, **dadurch gekennzeichnet, dass** das Rückstellelement (40, 50), ein dem Rückstellraum (44, 54) zugeordnetes Gehäuse (46) und die Ventilspindel (43, 53) des Sicherheitsventils (4) und/oder des Reinigungsventils (5) zu einer vormontierten Antriebsbaugruppe zusammengefasst sind.

10. Verschlussvorrichtung nach einem der Ansprüche 5 bis 9, **dadurch gekennzeichnet, dass** die Ventilkammer (41, 51) des Sicherheitsventils (4) und/oder des Reinigungsventils (5) einen Anschlussstutzen (45, 55) aufweist/aufweisen.

11. Verschlussvorrichtung nach einem der Ansprüche 1 bis 10, **dadurch gekennzeichnet, dass** die Verschlussvorrichtung (2) ein Füllrohr (6) umfasst, welches in der Eintragsöffnung (24) angeordnet ist.

12. Verschlussvorrichtung nach einem der Ansprüche 1 bis 11, **dadurch gekennzeichnet, dass** die Verschlussvorrichtung (2) eine pneumatisch angesteuerte und/oder eine handbetätigbare Betätigungsvorrichtung (3) für das Haupt-Verschlusselement (25) aufweist.

13. Probenahmegefäß mit einer Verschlussvorrichtung (2) nach einem der Ansprüche 1 bis 12.

14. Verfahren zum Befüllen eines Behälters, insbesondere eines Probenahmegefäßes (1), mittels einer Verschlussvorrichtung (2) umfassend ein Gehäuse (20) mit einem Verbindungsteil (21) für den Behälter,
**dadurch gekennzeichnet, dass** für einen Druckabbau innerhalb des Behälters beim Befüllen ein als Überdruckventil gestaltetes, einem Überdruckraum des Verbindungsteil zugeordnetes Sicherheitsventil (4) geöffnet wird.
